# EUROPÄISCHE PATENTSCHRIFT

(11) **EP 2 864 168 B1**
(45) Veröffentlichungstag und Bekanntmachung des Hinweises auf die Patenterteilung: **16.03.2016**
(21) Anmeldenummer: 13721269.2
(22) Anmeldetag: 11.05.2013
(51) Int. Cl.: B60T 17/08, F16D 65/28

(54) **VERFAHREN ZUM HERSTELLEN EINES KOMBINIERTEN BETRIEBSBREMS- UND FEDERSPEICHERBREMSZYLINDERS EINES FAHRZEUGS**
METHOD FOR PRODUCING A COMBINED SERVICE BRAKE CYLINDER AND SPRING-LOADED BRAKE CYLINDER OF A VEHICLE
PROCÉDÉ DE FABRICATION D'UN CYLINDRE DE FREIN DE SERVICE ET DE FREIN À RESSORT ACCUMULATEUR COMBINÉ D'UN VÉHICULE

(30) Priorität: 26.06.2012 DE 102012012708
(43) Veröffentlichungstag der Anmeldung: 29.04.2015
(73) Patentinhaber: WABCO GmbH, 30453 Hannover (DE)
(72) Erfinder: KLOOS, Eugen, 64625 Bensheim (DE); SCHRADER, Frank, 30916 Isernhagen (DE)
(74) Vertreter: Lauerwald, Jörg
(86) Internationale Anmeldenummer: PCT/EP2013/001401
(87) Internationale Veröffentlichungsnummer: WO 2014/000843

(56) Entgegenhaltungen:
- WO-A1-2009/071229
- DE-C2- 2 936 899

## Beschreibung

Die Erfindung betrifft ein Verfahren zum Herstellen eines kombinierten Betriebs-brems- und Federspeicherbremszylinders für ein Bremssystem eines Fahrzeugs.

Ein gattungsgemäßer kombinierter Betriebsbrems- und Federspeicherbremszylinder ist beispielsweise aus der DE 29 36 899 C2 bekannt. Bei diesem Aktuator sind der Betriebsbremszylinder und der Federspeicherbremszylinder zu einer Baueinheit kombiniert und durch eine Zwischenwand voneinander getrennt. Innerhalb des Federspeicherbremszylinders ist ein Kolben axial verschiebbar angeordnet, wobei an einer Seite des Kolbens eine Speicherfeder anliegt. Die Speicherfeder stützt sich mit ihrem anderen axialen Ende am Boden des Federspeicherbremszylinders ab. In einer zwischen der Zwischenwand und dem Kolben ausgebildeten Druckkammer des Federspeicherbremszylinders mündet ein Einlass, über den sich ein Druckmittel in diese Druckkammer einleiten lässt, um den Kolben unter Verspannung der Speicherfeder in Richtung des Bodens des Federspeicherbremszylinders zu verschieben. Wird dagegen der Druck in der Druckkammer des Federspeicherbremszylinders zwischen der Zwischenwand und dem Kolben bei Betätigung eines an den Einlass angeschlossenen Ventils entlastet, dann verschiebt die Speicherfeder den Kolben in Richtung zu der Zwischenwand. Der Kolben ist mit einer Kolbenstange verbunden, die sich axial durch die Zwischenwand in den Bereich einer Druckkammer des Betriebsbremszylinders erstreckt. Eine in die Zwischenwand eingesetzte Dichtung dichtet die Druckkammer des Federspeicherbremszylinders gegenüber der Kolbenstange ab. Die Kolbenstange trägt an ihrem vorderen, in den Bereich einer Druckkammer der Betriebsbremse sich erstreckenden axialen Ende ein Druckstück. In die Druckkammer der Betriebsbremse mündet ein Einlass, über den sich zur Betätigung der Betriebsbremse Druckmittel, insbesondere Druckluft, einführen lässt. Diese Druckluft wirkt auf eine innerhalb des Betriebsbremszylinders eingesetzte Membran, an deren von der Druckkammer der Betriebsbremse wegweisenden Seite ein Druckstück in Form eines Kolbenstangenkopfes angeordnet ist. Der Kolbenstangenkopf steht mit einer Kolbenstange in Verbindung, die sich aus dem Betriebsbremszylinder axial hinaus erstreckt und mit einem Bremsbetätigungsmechanismus in Verbindung steht. Wird die Betriebsbremse durch Einleiten von Druckluft in den Einlass betätigt, dann verschiebt die Druckluft die Membran, den Kolbenstangenkopf und die Kolbenstange der Betriebsbremse in der Weise, dass die an die Kolbenstange angeschlossenen Bremsbetätigungsteile zur Wirkung kommen und die Bremse des Kraftfahrzeugs anlegen. Während dieser normalen Betriebsbremsung verbleibt die Federspeicherparkbremse in ihrer inaktiven Position, in der die Speicherfeder durch Halten des Drucks in der zugeordneten Druckkammer zusammengedrückt bleibt. Die Federspeicherparkbremse kann wirksam werden, wenn die Betriebsbremse ausfällt, wenn also die Druckmittelverbindung in den Einlass unterbrochen ist, oder wenn sie als Feststellbremse benutzt werden soll und als Parkbremse bei einem abgestellten Fahrzeug wirkt.

Dieser bekannte kombinierte Betriebsbrems- und Federspeicherbremszylinder ist in Fig. 1 der DE 29 36 899 C2 dargestellt. Es ist ersichtlich, dass diese Abbildung eine genaue Zeichnung des Aktuators ist und somit als im Wesentlichen maßstäblich anzusehen ist. Hieraus ergibt sich, dass der maximal mögliche Hub des Kolbens des Federspeicherbremszylinders und der maximal mögliche Hub des Kolbens des Betriebsbremszylinders im Wesentlichen gleich sind, wodurch die Abmessungen des Betriebsbrems- und Federspeicherbremszylinders in seiner Längserstreckung festgelegt sind.

Bei bekannten kombinierten Betriebsbrems- und Federspeicherbremszylindern sind die Hublängen der Betriebsbremse und der Federspeicherbremse deswegen identisch, weil es vordergründig notwendig erscheint, für den Betriebsbremszylinder und den Federspeicherbremszylinder denselben axialen Hub vorzusehen, um die Fahrzeugbremse sowohl im Fahrbetrieb sowie bei einer Parkbremssituation mit der dafür notwenigen Kraft betätigen zu können.

Da eine Reduzierung der Baugröße von Fahrzeugbauteilen sowie die Einsparung von Gewicht und letztlich Herstellkosten immer von Interesse ist, liegt der Erfindung vor diesem Hintergrund die Aufgabe zugrunde, ein Verfahren zum Herstellen von einem kombinierten Betriebsbrems- und Federspeicherbremszylinder für ein Bremssystem eines Fahrzeugs vorzustellen, mit dem ein solcher Aktuator axial besonders kurz herstellbar ist und vergleichsweise geringe Herstellkosten verursacht.

Die Lösung dieser Aufgabe ergibt sich aus den Merkmalen des Hauptanspruchs, während vorteilhafte Ausgestaltungen dieses Verfahrens den Unteransprüchen entnehmbar sind.

Die Erfindung geht von der Überlegung aus, dass die vom Federspeicherbremszylinder aufzubringende Parkbremskraft abhängig vom Betriebszustand des Bremssystems in der Regel geringer ist als die Betriebsbremskraft. Dementsprechend ist eine axiale Verkürzung des Hubes des Kolbens des Federspeicherbremszylinders sowie daraus folgend eine Verkürzung der axialen Länge des Federspeicherbremszylinders möglich, sofern so genannte Worst-Case-Szenarien des Fahrzeugbremsenbetriebs berücksichtigt werden, um aus Sicherheitsgründen die minimal notwendige Parkbremskraft garantieren zu können. Andererseits darf der verfügbare Bauraum aus eben diesen Sicherheitsgründen nicht als entscheidender Parameter zur Bestimmung des Hubes herangezogen werden. Als Worst-Case-Szenarien sind solche Betriebszustände anzusehen, welche als die ungünstigsten Randbedingungen beim Fahrzeugbetrieb auftreten können.

Weiter liegt der Erfindung die Erkenntnis zugrunde, dass nicht nur die Speicherfeder des Federspeicherbremszylinders beim Spannen bzw. Entspannen einen ihr individuellen Betätigungskraftverlauf aufweist, sondern auch die anderen mechanischen Stellglieder des Bremssystems, angefangen mit dem Kolben des Federspeicherbremszylinders bis hin zum Bremssattel einer Scheibenbremse in Summe über einen Betätigungsweg ein elastisches Verhalten aufweisen, welches mit dem einer Feder vergleichbar ist. Allerdings ist das Einsetzen der Federeigenschaft dieser übrigen Bremsaktuatorik abhängig von dem Überwinden eines Lüftspiels, welches Betätigungswege von einzelnen Stellgliedern dieser Bremsaktuatorik umfasst, die zunächst ohne Wirkung auf einen tatsächliche Bremswirkung am Fahrzeug überwunden werden müssen. Das Lüftspiel hängt dabei unter anderem von dem thermischen Ausdehnungskoeffizienten der jeweiligen Bauteile und der aktuellen Bauteiltemperatur ab.

Gelöst wird die gestellte Aufgabe durch ein Verfahren zum Herstellen eines kombinierten Betriebsbrems- und Federspeicherbremszylinders für ein Bremssystem eines Fahrzeugs, mit den folgenden Schritten:
a) Bei verschiedenen Betriebszuständen Messen und Aufzeichnen von Kraft-Betätigungsweg-Kennlinien C1, C2, C3, C4 des Bremssystems mit all denjenigen Stellgliedern, die von der Speicherfeder des Federspeicherbremszylinders betätigbar sind,
b) Messen und Aufzeichnen von Kraft-Betätigungsweg-Kennlinien F1, F2, F3, F4 von unterschiedlichen Speicherfedern zur potentiellen Verwendung in dem Federspeicherbremszylinder,
c) Ermitteln des minimal notwendigen Betätigungshubes H3 des Kolbens des Federspeicherbremszylinders und der minimal notwendigen Federkraft einer Speicherfeder zum Ausführen einer Parkbremsfunktion mittels des Federspeicherbremszylinders durch Feststellen der Schnittpunkte der Kraft-Betätigungsweg-Kennlinien
   C1, C2, C3, C4 des Bremssystems mit den Kraft-Betätigungsweg-Kennlinien
   F1, F2, F3, F4 der unterschiedlichen Speicherfedern,
d) Auswahl derjenigen Speicherfeder, die bei dem ungünstigsten Betriebszustand des Bremssystems und gegebener maximaler Fahrzeugmasse mit dem geringstmöglichen Betätigungshub H3 eine zum Ausführen einer Parkbremsfunktion ausreichende Betätigungskraft erzeugt,
e) Herstellen des kombinierten Betriebsbrems- und Federspeicherbremszylinders mit der gemäß Schritt d) ausgewählten Speicherfeder und den sich aus dem geringstmöglichen Betätigungshub H3 des Kolbens des Federspeicherbremszylinders ergebenden Abmessungen.

Demnach ist bei dem kombinierten Betriebsbrems- und Federspeicherbremszylinder der Betriebsbremszylinder konventionell aufgebaut und der Federspeicherbremszylinder axial kleiner als der Bremszylinder ausgeführt. Dies ist nicht kritisch, da die Parkbremskraft eines Fahrzeugbremssystems üblicherweise geringer ist als die üblichen Betriebsbremskräfte. Um dies zu erreichen wird eine Speicherfeder für den Einbau in den Federspeicherbremszylinder ermittelt, die einerseits so kurz wie möglich ist, andererseits aber auch in der ungünstigsten Betriebssituation des Bremssystems bei einem Parkbremsvorgang diejenige Parkbremskraft aufbringen kann, die für ein sicheres Halten des Fahrzeugs mit maximaler Zuladung und ungünstig hohen Bauteiltemperaturen an einer Gefällestrecke notwendig ist.

Die bei unterschiedlichen Betriebssituationen mindestens notwendige Parkbremskraft lässt sich aus dem Schnittpunkt der Kraft-Betätigungsweg-Kennlinie F1, F2, F3, F4 einer Speicherfeder für den Einbau in einen Federspeicherbremszylinder mit einer Kraft-Betätigungsweg-Kennlinie C1, C2, C3, C4 der übrigen Bremsaktuatorik des Bremssystems ermitteln, wobei die jeweilige Kraft-Betätigungsweg-Kennlinie C1, C2, C3, C4 mit ihrem Verlauf diejenigen Gegenkräfte einer fiktiven Feder angibt, die bei unterschiedlichen Betätigungswegen der Speicherfeder auf diese aus den anderen mechanischen Stellgliedern des Bremssystems zurückwirken (Aktionskraft = Reaktionskraft). Diese Gegenkräfte von den anderen mechanischen Stellgliedern bzw. der übrigen Bremsaktuatorik des Bremssystems sind wie erwähnt abhängig von der Temperatur, dem Lüftspiel zwischen den einzelnen Stellgliedern und deren federelastischen Materialeigenschaften.

Zur Konstruktion eines optimal kurzen Federspeicherbremszylinders wird demnach eine vergleichsweise kurze, in diesen Federspeicherbremszylinder einzubauende Speicherfeder benötigt, die mit minimalem Betätigungshub eine hinsichtlich der aufzubringenden Parkbremskraft in der ungünstigsten Betriebssituation ausreichende Betätigungskraft erzeugen kann. Mit dem vorgeschlagenen Verfahren ist es möglich, Speicherfedern, die unterschiedlich hohe Parkbremskräfte erzeugen können, mit Betriebssituationen des Bremssystems bei Nutzen der Parkbremsfunktion zu konfrontieren, um Herauszufinden, welche Speicherfeder bei welcher Betriebssituation bei Erzeugung einer ausreichend hohen Parkbremskraft einen minimal möglichen Betätigungshub benötigt.

In einer besonderen Ausführungsform des erfindungsgemäßen Verfahrens werden zur Ermittlung einer geeigneten, möglichst kurzen Speicherfeder für den Federspeicherbremszylinder vier unterschiedliche Kraft-Betätigungsweg-Kennlinie C1, C2, C3, C4 der übrigen Bremsaktuatorik des Bremssystems einbezogen. Dieses Bremssystem kann Scheibenbremsen oder Trommelbremsen aufweisen.

Eine erste Kraft-Betätigungsweg-Kennlinie C1 der übrigen Bremsaktuatorik des Bremssystems wird dazu vorab für den Zustand eines kalten Bremssystems mit neuen, eingelaufenen Bremsbelägen ermittelt, wodurch ein geringes Lüftspiel zwischen den einzelnen mechanischen Stellgliedern des von dem Federspeicherbremszylinder betätigten Bremssystems zu erwarten ist. Außerdem ist zu erwarten, dass die einzelnen mechanischen Stellglieder der übrigen Bremsaktuatorik des Bremssystems wegen ihrer vergleichsweise geringen Temperatur eine relativ geringe Elastizität aufweisen, so dass die Kraft-Betätigungsweg-Kennlinie C1 der übrigen Bremsaktuatorik des Bremssystems eine vergleichsweise große Steigung aufweist.

Eine zweite Kraft-Betätigungsweg-Kennlinie C2 der übrigen Bremsaktuatorik des Bremssystems wird vorab für den Zustand eines nach intensiver Betätigung der Betriebsbremse heißen Bremssystems inklusive Bremsbelägen und Bremsscheiben ermittelt, so dass ein größeres Lüftspiel und eine größere Elastizität des Stellsystems zumindest in axialer Richtung der Stellglieder erwartet werden kann.

Weiter wird eine dritte Kraft-Betätigungsweg-Kennlinie C3 der übrigen Bremsaktuatorik des Bremssystems für den Zustand eines nach intensiver Betätigung der Betriebsbremse abgekühlten und durch Betätigung der Betriebsbremse nachgestellten Bremssystems ermittelt, für die eine ähnlich Steigung wie für die erste Kraft-Betätigungsweg-Kennlinie C1 sowie ein noch größeres Lüftspiel erwartet wird.

Schließlich wird zur Beurteilung, welche axial verkürzte Speicherfeder wohl die beste für den Zustand eines nach intensiver Betätigung der Betriebsbremse abgekühltes und nicht nachgestellten Bremssystems ist, eine vierte Kraft-Betätigungsweg-Kennlinie C4 der übrigen Bremsaktuatorik des Bremssystems ermittelt. Für diese wird eine ähnlich Steigung wie bei der zweiten Kraft-Betätigungsweg-Kennlinie C2 der übrigen Bremsaktuatorik des Bremssystems erwartet, und sie wird voraussichtlich das größte Lüftspiel aufweisen. Hierauf wird noch bei den Erläuterungen zu einem Ausführungsbeispiel eingegangen.

Hinsichtlich der Kraft-Betätigungsweg-Kennlinien F1, F2, F3, F4 potentiell verwendbarer Speicherfedern ist festzuhalten, dass diese den Federkraftverlauf über den Betätigungsweg einer jeweiligen Speicherfeder des Federspeicherbremszylinder ausgehend von einem axial zusammengedrückten Zustand bis zu einem maximalen, konstruktiv vorgegebenen, teilweise entspannten Zustand angeben.

Dementsprechend kann der notwendige Federkraftverlauf beispielsweise für ein Fahrzeug ermittelt werden, das häufig im Gelände mit großen Steigungen und bei vergleichsweise hohen Bauteiltemperaturen des Bremssystems einsetzt wird, oder aber für ein Fahrzeug, das eher auf konventionellen Straßen mit vergleichsweise geringen Steigungen und vergleichsweise geringen Temperaturen betrieben wird. Dies bedeutet, dass einer der zu berücksichtigenden Parameter das vorgesehene Einsatzgebiet des Fahrzeugs ist, also bei einem Geländefahrzeug oder einem normalen Personenfahrzeug.

Die Erfindung beruht auf der Feststellung, dass es möglich ist, für die Aktuatorik eines Bremssystems Kraft-Betätigungsweg-Kennlinien C1, C2, C3, C4 zu messen, welche die Elastizität der zur Aktuatorik gehörenden Bauteile, außer der Speicherfeder, und die Abhängigkeit von der Temperatur dieser Bauteile durch den Steigungswinkel der Kennlinie darstellen. Diese Kennlinien C1, C2, C3, C4 zeigen, welcher axiale Hub in einem mechanischen Bremsbetätigungssystem aufgewendet werden muss, um eine bestimmte, notwendige Bremskraft zu erzeugen.

Dabei ist der Schnittpunkt dieser Kennlinien C1, C2, C3, C4 mit der Hub-Achse abhängig vom Lüftspiel, das durch die Temperatur der Bauteile und dem Zustand der Lüftspielnachstellung am Bremszylinder beeinflusst wird. Wenn dann im selben Diagramm die Kraft-Betätigungsweg-Kennlinien F1, F2, F3, F4 von Speicherfedern für unterschiedliche Anwendungsfälle eingetragen werden, lässt sich auf einfache Weise am Schnittpunkt einer Kraft-Betätigungsweg-Kennlinie der Speicherfedern F1, F2, F3, F4 mit einer der Kraft-Betätigungsweg-Kennlinien C1, C2, C3, C4 der übrigen Bremsaktuatorik des Bremssystems ablesen, ob mit einem vorgegebenen Hub des Kolbens des Federspeicherbremszylinders eine vorgegebene Bremskraft erreicht wird bzw. welcher Hub des Kolbens des Federspeicherbremszylinders zur Erzeugung einer vorgegebene Bremskraft benötigt wird.

Die Erfindung wird nachstehend anhand eines in der Zeichnung dargestellten Ausführungsbeispiels weiter erläutert. In dieser Zeichnung zeigt
Fig. 1 einen Längsschnitt durch einen bekannten kombinierten Betriebsbrems- und Federspeicherbremszylinder, und
Fig. 2 ein Diagramm mit Kraft-Betätigungsweg-Kennlinien F1- F4 unterschiedlicher Speicherfedern eines Federspeicherbremszylinder und Kraft-Betätigungsweg-Kennlinien C1- C4 der der übrigen mechanischen Stellmittel des Bremssystems.

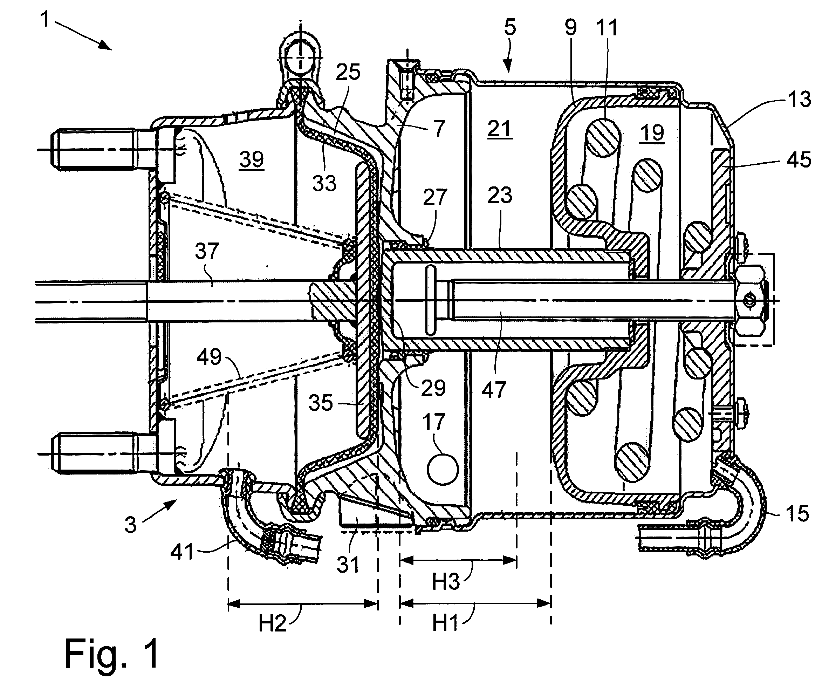

In Fig. 1 ist demnach ein an sich bekannter kombinierter Betriebsbrems- und Federspeicherbremszylinder 1 dargestellt. Er weist einen für eine Trommelbremse ausgelegten Betriebsbremszylinder 3 und einem Federspeicherbremszylinder 5 auf, die durch eine Zwischenwand 7 mechanisch miteinander verbunden und drucktechnisch voneinander getrennt sind. Zur Betätigung einer Scheibenbremse wäre lediglich der Betriebsbremszylinder 3 geringfügig anders ausgelegt. Innerhalb des Federspeicherbremszylinders 5 ist ein Kolben 9 axial verschiebbar angeordnet, wobei an einer Seite des Kolbens 9 eine Speicherfeder 11 anliegt. Die Speicherfeder 11 stützt sich mit ihrem anderen axialen Ende an einem Boden 13 des Federspeicherbremszylinders 5 über eine Bodenverstärkungsplatte 45 ab.

In einer ersten Druckkammer 21 zwischen der Zwischenwand 7 und dem Kolben 9 mündet ein Einlass 17, durch den Druckluft durch ein nicht dargestelltes Ventil gesteuert eingeleitet wird, um den Kolben 9 unter Verspannung der Speicherfeder 11 in Richtung zum Boden 13 zu verschieben. Der Kolben 9 ist mit einer Kolbenstange 23 verbunden, die sich axial durch die Zwischenwand 7 in den Bereich einer zweiten Druckkammer 25 des Betriebsbremszylinders 3 erstreckt. Eine in die Zwischenwand 7 eingesetzte Dichtung 27 dichtet die Zwischenwand 7 gegenüber der Kolbenstange 23 ab. Die Kolbenstange 23 des Federspeicherbremszylinders 5 trägt an ihrem speicherfederfernen Ende ein Druckstück 29, das in der in Fig. 1 dargestellten Stellung an einer Membran 33 des Betriebsbremszylinders 3 anliegt.

In die zwischen der Membran 33 und der Zwischenwand 7 gebildete zweite Druckkammer 25 mündet ein Einlass 31, über den sich Druckluft zur Betätigung der Betriebsbremse gesteuert einführen lässt. Diese Druckluft wirkt auf die innerhalb des Betriebsbremszylinders 3 eingesetzte Membran 33 ein, die über ein Druckstück in Form eines Kolbenstangenkopfes 35 auf eine aus dem Betriebsbremszylinder 3 herausgeführte Kolbenstange 37 einwirkt. Diese Kolbenstange 37 steht in nicht dargestellter Weise mit einem mechanische Stellmittel aufweisenden Brems-Betätigungsmechanismus außerhalb des Betriebsbrems- und Federspeicherbremszylinder 1 in Verbindung. Bei dem Brems-Betätigungsmechanismus kann es sich um die Betätigungsteile einer Scheibenbremse eines Kraftfahrzeuges handeln.

Wird die Betriebsbremse durch Einleiten von Druckluft in den Einlass 31 betätigt, dann verschiebt die Druckluft die Membran 33, den Kolbenstangenkopf 35 und die Kolbenstange 37 des Betriebsbremszylinders 3 derart, dass die an dieser Kolbenstange 37 angeschlossenen Betätigungsteile zur Wirkung kommen und die Bremse des Kraftfahrzeugs anlegen. Bei einem Absenken des Luftdrucks in der zweiten Druckkammer 25 bewirkt eine membranfern an dem Kolbenstangenkopf 35 anliegende Rückstellfeder 49 ein Zurückschieben der Kolbenstange 37 des Betriebsbremszylinders 3 in Richtung zur Zwischenwand 7.

Während einer normalen Betriebsbremsung mittels des Betriebsbremszylinders 3 verbleibt die Federspeicherbremse 5 in ihrer inaktiven Position, in der die Speicherfeder 11 durch Halten des Drucks in der ersten Druckkammer 21 zusammengedrückt ist. Wird die Druckluft ventilgesteuert über den Einlass 17 entlastet, verschiebt die Speicherfeder 11 den Kolben 9 und damit die erste Kolbenstange 23 der Federspeicherbremse 5, die sich über das Druckstück 29 an der Membran 33 und somit über den Kolbenstangenkopf 35 an der Kolbenstange 37 des Betriebsbremszylinders 3 abstützt und diese derart verschiebt, dass der Bremsbetätigungsmechanismus zur Wirkung kommt. Auf diese Weise wird die Bremse nur durch die Wirkung der Speicherfeder 11 betätigt und wirkt als Parkbremse. Des Weiteren lässt sich der Federspeicherbremszylinder 5 auch als Notbremse bei Ausfall des Mediumdrucks einsetzen.

Zum Be- und Entlüften einer die Speicherfeder 11 aufnehmenden ersten Federkammer 19 im Federspeicherbremszylinder 5 ist eine erste Entlüftungsöffnung 15 und in einer die Rückstellfeder 49 aufnehmenden zweiten Federkammer 39 im Betriebsbremszylinder 3 eine zweite Entlüftungsöffnung 41 vorgesehen, die in nicht dargestellter Weise mit einem Luftfilter verbunden sein können, um das Ansaugen von Verunreinigungen bei der Kolben- bzw. Membranbewegung zu vermeiden.

Radial innerhalb der Kolbenstange 23 des Federspeicherbremszylinder 5 ist eine Löseschraube 47 angeordnet, die dazu dient, den Kolben 9 des Federspeicherbremszylinders 5 in der dargestellten Stellung zu halten, wenn der kombinierte Betriebsbrems- und Federspeicherbremszylinder 1 zu Reparatur- bzw. Revisionszwecken zerlegt werden soll. Außerdem ermöglicht es die Löseschraube 47, dass der Kolben 9 des Federspeicherbremszylinder 1 beim Ausfall der Druckluftversorgung mechanisch in der in
Fig. 1 gezeigten Stellung gehalten werden kann.

Der maximale axiale Betätigungshub des Kolbens 9 des Federspeicherbremszylinders 5 dieses bekannten kombinierte Betriebsbrems- und Federspeicherbremszylinders 1 ist durch den Doppelpfeil H1 veranschaulicht. Deutlich erkennbar ist dieser Betätigungshub H1 etwa genauso groß wie der Betätigungshub H2 des Kolbens 37 des Betriebsbremszylinders 3. Gemäß der Erfindung wird ein Verfahren genutzt, um einen kombinierten Betriebsbrems- und Federspeicherbremszylinder 1 herzustellen, der mit einem verkürzten Betätigungshub H3 des Kolbens 9 des Betriebsbremszylinders 5 auskommt, so dass auch das Gehäuses des Federspeicherbremszylinders 5 entsprechend verkürzt herstellbar ist.

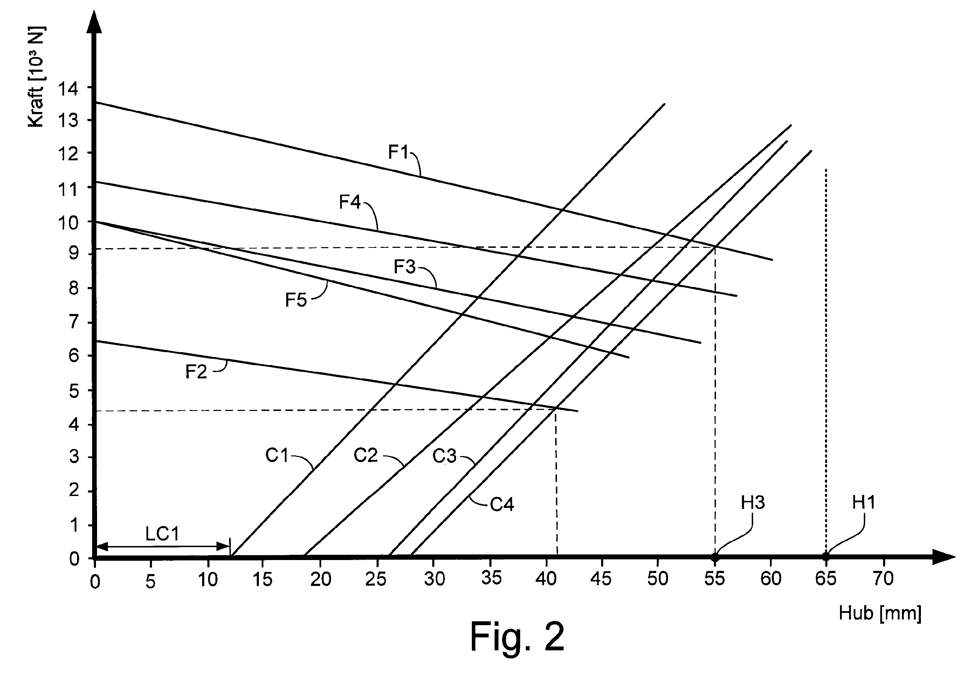

Fig. 2 zeigt ein Betätigungskraft-Betätigungsweg-Diagramm mit mehreren betriebssituationsabhängig ermittelten Kraft-Betätigungsweg-Kennlinien C1, C2, C3, C4 der übrigen Bremsaktuatorik, außer der Speicherfeder, des Bremssystems. Diese Kennlinien werden vorab an dem Bremssystem ermittelt. Der Schnittpunkt jeder dieser Kraft-Betätigungsweg-Kennlinien C1, C2, C3, C4 mit der Hub-Achse ist abhängig vom Lüftspiel, das durch das Zusammenspiel der Temperatur der mechanischen Bauteile im Bremsbetätigungssystem, beispielsweise Bremssattel, Bremsbeläge, Bremsscheibe, Bremsaktuatorik und dergleichen, sowie deren thermischen Ausdehnungskoeffizient und dem Zustand der Lüftspielnachstellung beeinflusst ist. Die Kraft-Betätigungsweg-Kennlinien C1, C2, C3, C4 zeigen demnach die von der Speicherfeder 11 des Federspeicherbremszylinders 5 aufzubringenden Betätigungskraft zur Realisierung des jeweiligen Betätigungshubs.

Die Kraft-Betätigungsweg-Kennlinie C1 der übrigen Bremsaktuatorik des Bremssystems stellt den optimalen Zustand des Bremssystems dar, nachdem neue Bremsbeläge eingefahren sind. Das exemplarisch einmal bezeichnete Lüftspiel LC1 des Betriebsbrems- und Federspeicherbremszylinders 1 beträgt in dieser Betriebssituation erkennbar etwa 12 mm.

Die Kraft-Betätigungsweg-Kennlinie C2 der übrigen Bremsaktuatorik des Bremssystems stellt den Zustand einer durch intensive Betätigung heißen Bremse dar, die ein größeres Lüftspiel als eine kalte Bremse aufweist. Das Lüftspiel der Bremse beträgt in dieser Betriebssituation etwa 18 mm. Des Weiteren ist die Steigung der Kraft-Betätigungsweg-Kennlinie C2 der übrigen Bremsaktuatorik des Bremssystems für eine heiße Bremse geringer als die Kraft-Betätigungsweg-Kennlinien C1 für eine kalte Bremse.

Die Kraft-Betätigungsweg-Kennlinie C3 der übrigen Bremsaktuatorik des Bremssystems stellt den Zustand des Bremssystems einer Bremse dar, die nach heißem Zustand abgekühlt und durch Betätigen der Betriebsbremse zur Reduzierung des Lüftspiels mechanisch nachgestellt wurde.

Die Kraft-Betätigungsweg-Kennlinie C4 der übrigen Bremsaktuatorik des Bremssystems stellt den Zustand einer kalten Bremse dar, die nach einem heißen Zustand abgekühlt ist und nicht durch eine Betätigung der Betriebsbremse mechanisch nachgestellt wurde. Es ist deutlich erkennbar, dass das Lüftspiel für die Kennlinien C1 bis C4 im Diagramm immer größer wird, während die Steigung der Kennlinien C1 bis C4 für kalte Bremsen gleich bleibt sowie nur für die Kennlinie C2 für eine heiße Bremse geringer ist.

Die Kraft-Betätigungsweg-Kennlinien F1, F2, F3, F4 kennzeichnen vier unterschiedliche Speicherfedern, die unterschiedliche Federkonstanten aufweisen. So weist die Speicherfeder mit der Kraft-Betätigungsweg-Kennlinie F1 im gespannten Zustand gemäß Fig. 1 bei einem Hub von Null eine sehr hohe Federkraft von 13.500 N auf, die bei einem Hub von 55 mm auf ca. 9.200 N abgesunken ist.

Die Kraft-Betätigungsweg-Kennlinie F2 weist dagegen bei einem Hub von Null eine Federkraft von ca. 6.400 N auf und bei einem Hub von 42 mm nur eine Federkraft von ca. 4.500 N. Die Kraft-Betätigungsweg-Kennlinien F3, F4 und F5 liegen zwischen den Werten der Kraft-Betätigungsweg-Kennlinien F1 und F2.

Soll für ein Fahrzeug mit einer bestimmten Fahrzeugmasse, das im Gelände mit steilen Steigungen und Abfahrten eingesetzt werden soll, eine mindestens erforderliche Betätigungskraft der Speicherfeder 11 von ca. 9.000 N ausreichen, und soll dafür der erforderliche Hub des Kolbens 9 bzw. der Speicherfeder 11 im Federspeicherbremszylinder 5 ermittelt werden, genügt es, beispielsweise den Schnittpunkt der Kraft-Betätigungsweg-Kennlinie F1 der zugeordneten Speicherfeder mit der Kraft-Betätigungsweg-Kennlinien C4 der übrigen Bremsaktuatorik des Bremssystems zu suchen, welcher einen Hub für die Speicherfeder 11 von 55 mm und eine Federkraft von ca. 9.200 N ergibt. Es ist somit möglich, bei Nutzung einer Speicherfeder 11 mit der Kraft-Betätigungs-weg-Kennlinie F1 den in Fig. 1 und Fig. 2 ersichtlichen Hub H1 des Kolbens 9 des Federspeicherbremszylinders 5 von H1 = 65 mm auf H3 = 55 mm um 10 mm zu verkürzen. Dementsprechend kann auch das Gehäuse und die Kolbenstange 23 des Federspeicherbremszylinders 5 um 10 mm kürzer ausgebildet werden, wodurch vorteilhaft das Gesamtgewicht und die axiale Baulänge des kombinierten Betriebsbrems- und Federspeicherbremszylinders 1 reduzierbar ist. Dieses reduziert außerdem vorteilhaft die Material- und Bearbeitungskosten des kombinierten Betriebsbrems- und Federspeicherbremszylinders.

Das Diagramm gemäß Fig. 2 kann auch dazu dienen, vorgegebene Abmessungen des Federspeicherbremszylinders 5 daraufhin zu überprüfen, ob die Federkraft einer Speicherfeder 11 eines Federspeicherbremszylinders 5 ausreicht, um einem Fahrzeug in allen Betriebszuständen und Geländebedingungen als Aktuator einer Feststellbremse zu dienen. Wird beispielsweise angenommen, dass ein Fahrzeug nur auf Wegen mit geringen Steigungen und Abfahrten eingesetzt wird, so soll die minimal notwendige Betätigungskraft der Speicherfeder 4.800 N betragen. Soll dann der kombinierte Betriebsbrems- und Federspeicherbremszylinders 1 in einen verfügbaren engen Bauraum des Fahrzeugs eingepasst werden, der eine Verkürzung des Federspeicherbremszylinders 5 und damit des Hubes der Speicherfeder 11 auf 40 mm erfordert, so kann mittels des Diagramms der Fig. 2 nachgeprüft werden, ob mit einer für diesen Federspeicherbremszylinder 5 vorgesehenen Speicherfeder 11 mit der Kennlinie F2 bei dem spezifizierten Speicherfederhub von 40 mm die genannte Federkraft von 4.800 N erzeugbar ist.

Aus dem Diagramm der Fig. 2 ergibt sich, dass die Kennlinie F2 der Speicherfeder 11 die Kennlinie C4 bei einem Hub von etwa 42 mm schneidet und die dabei zur Verfügung stehende Federkraft mit 4.500 N unter dem notwendigen Wert von 4.800 N läge. Es folgt daraus, dass ein Fahrzeug mit einem kombinierten Betriebsbrems- und Federspeicherbremszylinders 1 mit dem spezifizierten Hub von 40 mm nicht im Gelände mit starken Steigungen und Abfahrten eingesetzt werden darf, und dass der Fahrer nach Fahrten in extremen Einsatzbedingungen die Betriebsbremse nach dem Abkühlen mehrmals betätigen müsste, um die Bremse nachzustellen. Dies ist nicht akzeptabel, so dass sich ergibt, dass in dem Federspeicherbremszylinder 5 eine Speicherfeder 11 mit einer Kraft-Betätigungsweg-Kennlinie F2 nicht genutzt werden darf.

Wie Fig. 2 verdeutlicht, bietet sich in dem beschriebenen Beispiel die Nutzung einer Speicherfeder 11 im Federspeicherbremszylinder 5 mit einer Kraft-Betätigungsweg-Kennlinie F5 an, die im Schnittpunkt mit der Kraft-Betätigungsweg-Kennlinie C4 bei einem Hub vom 46 mm eine Betätigungskraft für eine Parkbremsfunktion von 6.100 N erzeugt. Gegenüber einem konventionell 65 mm langen Kolbenhub des Federspeicherbremszylinders 5 ergibt sich vorteilhaft eine Baulängenverkürzung von 19 mm.

Aus dem Diagramm der Fig. 2 ergibt sich, dass zur Bestimmung des minimalen Hubes einer Speicherfeder 11 im Federspeicherbremszylinder 5 so genannte Worst-Case-Szenarien berücksichtigt werden müssen, die der Kraft-Betätigungsweg-Ken nli nie C4 entsprechen, um aus Sicherheitsgründen eine minimal notwendige Parkbremskraft garantieren zu können.

### Bezugzeichenliste

- 1: Kombinierter Betriebsbrems- und Federspeicherbremszylinder
- 3: Betriebsbremszylinder
- 5: Federspeicherbremszylinder
- 7: Zwischenwand
- 9: Kolben des Federspeicherbremszylinders
- 11: Speicherfeder
- 13: Boden
- 15: Entlüftungsöffnung
- 17: Einlass
- 19: Erste Federkammer
- 21: Erste Druckkammer
- 23: Kolbenstange des Federspeicherbremszylinders
- 25: Zweite Druckkammer
- 27: Dichtung
- 29: Druckstück
- 31: Einlass
- 33: Membran
- 35: Kolbenstangenkopf
- 37: Kolbenstange des Betriebsbremszylinders
- 39: Zweite Federkammer
- 41: Entlüftungsöffnung
- 45: Bodenverstärkungsplatte
- 47: Löseschraube
- 49: Rückstellfeder des Betriebsbremszylinders
- H1: Hublänge des Federspeicherbremszylinders
- H2: Hublänge des Betriebsbremszylinders
- H3: Verkürzung der Hublänge des Federspeicherbremszylinders
- LC1: Lüftspiel

## Patentansprüche

1. Verfahren zum Herstellen eines kombinierten Betriebsbrems- und Federspeicherbremszylinders (1) für ein Bremssystem eines Fahrzeugs, mit den folgenden Schritten:
a) Bei verschiedenen Betriebszuständen Messen und Aufzeichnen von Kraft-Betätigungsweg-Kennlinien (C1, C2, C3, C4) des Bremssystems mit all denjenigen Stellgliedern, die von der Speicherfeder (11) des Federspeicherbremszylinders (5) betätigbar sind,
b) Messen und Aufzeichnen von Kraft-Betätigungsweg-Kennlinien (F1, F2, F3, F4) von unterschiedlichen Speicherfedern (11) zur potentiellen Verwendung in dem Federspeicherbremszylinder (5),
c) Ermitteln des minimal notwendigen Betätigungshubes (H3) des Kolbens (9) des Federspeicherbremszylinders (5) und der minimal notwendigen Federkraft einer Speicherfeder (11) zum Ausführen einer Parkbremsfunktion mittels des Federspeicherbremszylinders (5) durch Feststellen der Schnittpunkte der Kraft-Betätigungsweg-Kennlinien (C1, C2, C3, C4) des Bremssystems mit den Kraft-Betätigungsweg-Kennlinien (F1, F2, F3, F4) der unterschiedlichen Speicherfedern (11),
d) Auswahl derjenigen Speicherfeder (11), die bei dem ungünstigsten Betriebszustand des Bremssystems und gegebener maximaler Fahrzeugmasse mit dem geringstmöglichen Betätigungshub (H3) eine zum Ausführen einer Parkbremsfunktion ausreichende Betätigungskraft erzeugt,
e) Herstellen des kombinierten Betriebsbrems- und Federspeicherbremszylinders (1) mit der gemäß Schritt d) ausgewählten Speicherfeder (11) und den sich aus dem geringstmöglichen Betätigungshub (H3) des Kolbens (9) des Federspeicherbremszylinders (5) ergebenden Abmessungen.

2. Verfahren nach Anspruch 1, **dadurch gekennzeichnet, dass** eine Kraft-Betätigungsweg-Kennlinie (C1) für den Zustand eines kalten Bremssystems mit neuen, eingelaufenen Bremsbelägen ermittelt wird, dass eine Kraft-Betätigungsweg-Kennlinie (C2) für den Zustand eines nach intensiver Betätigung der Betriebsbremse heißen Bremssystems ermittelt wird, dass eine Kraft-Betätigungsweg-Kennlinie (C3) für den Zustand eines nach intensiver Betätigung der Betriebsbremse abgekühlten und durch Betätigung der Betriebsbremse mechanisch nachgestellten Bremssystems ermittelt wird, und dass eine Kraft-Betätigungsweg-Kennlinie (C4) für den Zustand eines nach intensiver Betätigung der Betriebsbremse abgekühlten und nicht nachgestellten Bremssystems ermittelt wird.

3. Verfahren nach Anspruch 1 oder 2, **dadurch gekennzeichnet, dass** die Kraft-Betätigungsweg-Kennlinien (F1, F2, F3, F4) den Federkraftverlauf einer Speicherfeder (11) über deren Hub ausgehend von einem axial zusammengedrückten Zustand bis zu einem maximalen, konstruktiv vorgegebenen, teilweise entspannten Zustand darstellen.

## Claims

1. Method for producing a combined service-brake and spring-loaded brake cylinder (1) for a brake system of a vehicle, having the following steps:
a) in various operating states, measuring and recording force/actuation path characteristics (C1, C2, C3, C4) of the brake system with all the actuating members which can be actuated by the storage spring (11) of the spring-loaded brake cylinder (5),
b) measuring and recording force/actuation path characteristics (F1, F2, F3, F4) of different storage springs (11) for potential use in the spring-loaded brake cylinder (5),
c) determining the minimum required actuating stroke (H3) of the piston (9) of the spring-loaded brake cylinder (5) and the minimum required spring force of a storage spring (11) for carrying out a parking brake function by means of the spring-loaded brake cylinder (5) by ascertaining the points of intersection of the force/actuation path characteristics (C1, C2, C3, C4) of the brake system with the force/actuation path characteristics (F1, F2, F3, F4) of the different storage springs (11),
d) selecting the storage spring (11) which, in the least favorable operating state of the brake system and with a given maximum vehicle mass, produces an actuating force sufficient for carrying out a parking brake function with the smallest possible actuating stroke (H3),
e) producing the combined service-brake and spring-loaded brake cylinder (1) with the storage spring (11) selected according to step d) and with the dimensions resulting from the smallest possible actuating stroke (H3) of the piston (9) of the spring-loaded brake cylinder (5).

2. Method according to Claim 1, **characterized in that** a force/actuation path characteristic (C1) is determined for the state of a cold brake system with new, run-in brake pads, **in that** a force/actuation path characteristic (C2) is determined for the state of a brake system which is hot after intensive actuation of the service brake, **in that** a force/actuation path characteristic (C3) is determined for the state of a brake system which has cooled after intensive actuation of the service brake and has been mechanically readjusted by actuation of the service brake, and **in that** a force/actuation path characteristic (C4) is determined for the state of a brake system which has cooled after intensive actuation of the service brake and has not been readjusted.

3. Method according to Claim 1 or 2, **characterized in that** the force/actuation path characteristics (F1, F2, F3, F4) represent the spring force variation of a storage spring (11) over the stroke thereof, starting from an axially compressed state up to a maximum partially relaxed state predetermined by the design.

## Revendications

1. Procédé de fabrication d'un cylindre de frein de service et de frein à ressort accumulateur combiné (1) pour un système de freinage d'un véhicule, comprenant les étapes suivantes :
a) dans différents états de fonctionnement, mesurer et enregistrer des courbes caractéristiques de la course d'actionnement de force (C1, C2, C3, C4) du système de freinage avec tous les actionneurs qui peuvent être actionnés par le ressort accumulateur (11) du cylindre de frein à ressort accumulateur (5),
b) mesurer et enregistrer des courbes caractéristiques de la course d'actionnement de force (F1, F2, F3, F4) de différents ressorts accumulateurs (11) pour une utilisation potentielle dans le cylindre de frein à ressort accumulateur (5),
c) déterminer la course d'actionnement nécessaire minimale (H3) du piston (9) du cylindre de frein à ressort accumulateur (5) et la force de ressort nécessaire minimale d'un ressort accumulateur (11) pour effectuer une fonction de frein de stationnement au moyen du cylindre de frein à ressort accumulateur (5) en déterminant les points d'intersection des courbes caractéristiques de la course d'actionnement de force (C1, C2, C3, C4) du système de freinage et des courbes caractéristiques de la course d'actionnement de force (F1, F2, F3, F4) des différents ressorts accumulateurs (11),
d) sélectionner le ressort accumulateur (11) qui, dans l'état de fonctionnement le plus défavorable du système de freinage et pour la masse du véhicule maximale donnée avec la course d'actionnement la plus faible possible (H3), génère une force d'actionnement suffisante pour effectuer une fonction de frein de stationnement,
e) fabriquer le cylindre de frein de service et de frein à ressort accumulateur combiné (1) avec le ressort accumulateur (11) sélectionné conformément à l'étape d) et les dimensions résultant de la course d'actionnement la plus faible possible (H3) du piston (9) du cylindre de frein à ressort accumulateur (5).

2. Procédé selon la revendication 1, **caractérisé en ce qu'**une courbe caractéristique de la course d'actionnement de force (C1) pour l'état d'un système de freinage froid est déterminée avec des garnitures de frein neuves rôdées, **en ce qu'**une courbe caractéristique de la course d'actionnement de force (C2) est déterminée pour l'état d'un système de freinage chaud après actionnement intensif des freins de service, **en ce qu'**une courbe caractéristique de la course d'actionnement de force (C3) est déterminée pour l'état d'un système de freinage refroidi après un actionnement intensif des freins de service et réajusté mécaniquement par actionnement des freins de service, et **en ce qu'**une courbe caractéristique de la course d'actionnement de force (C4) est déterminée pour l'état d'un système de freinage refroidi après un actionnement intensif des freins de service et non réajusté.

3. Procédé selon la revendication 1 ou 2, **caractérisé en ce que** les courbes caractéristiques de la course d'actionnement de force (F1, F2, F3, F4) constituent l'allure de la force de ressort d'un ressort accumulateur (11) sur sa course à partir d'un état comprimé axialement jusqu'à un état maximal partiellement détendu, prédéfini par la construction.
